(19) Europäisches Patentamt

European Patent Office

Office européen des brevets

(11) EP 2 304 416 B1

(12) FASCICULE DE BREVET EUROPEEN

(45) Date de publication et mention de la délivrance du brevet:
**11.09.2019 Bulletin 2019/37**

(21) Numéro de dépôt: **09797450.5**

(22) Date de dépôt: **22.06.2009**

(51) Int Cl.:
*G01N 27/22* (2006.01)   *H01G 4/06* (2006.01)

(86) Numéro de dépôt international:
**PCT/EP2009/057708**

(87) Numéro de publication internationale:
**WO 2010/006877 (21.01.2010 Gazette 2010/03)**

(54) **CAPTEUR D'HUMIDITÉ CAPACITIF À DIÉLECTRIQUE HYDROPHILE NANO-POREUX ET PROCÉDÉ POUR SA RÉALISATION**

KAPAZITIVER FEUCHTIGKEITSSENSOR MIT EINEM NANOPORÖSEN HYDROPHILEN DIELEKTRISCHEN ELEMENT UND HERSTELLUNGSVERFAHREN DAFÜR

CAPACITIVE HUMIDITY SENSOR WITH NANOPOROUS HYDROPHILIC DIELECTRIC AND FABRICATION PROCESS THEREFOR

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **16.07.2008 FR 0854826**

(43) Date de publication de la demande:
**06.04.2011 Bulletin 2011/14**

(73) Titulaire: **Commissariat à l'Énergie Atomique et aux Énergies Alternatives
75015 Paris (FR)**

(72) Inventeurs:
• **GRANGE, Hubert**
  **F-38100 Grenoble (FR)**
• **DANEL, Jean-Sébastien**
  **F-38130 Echirolles (FR)**

• **DESLOGES, Brigitte**
  **F-38450 Reymure de Vif (FR)**
• **JOUSSEAUME, Vincent**
  **F-38700 Le Sappey en Chartreuse (FR)**

(74) Mandataire: **Ilgart, Jean-Christophe et al
BREVALEX
95, rue d'Amsterdam
75378 Paris Cedex 8 (FR)**

(56) Documents cités:
**WO-A-2007/036922      WO-A-2007/057794
FR-A- 2 893 761       US-A- 5 143 696
US-A1- 2004 207 083   US-A1- 2007 161 256**

• **BJORKQVIST M ET AL: "Studies on hysteresis reduction in thermally carbonized porous silicon humidity sensor" IEEE SENSORS JOURNAL IEEE USA, vol. 6, no. 3, juin 2006 (2006-06), pages 542-547, XP002516517 ISSN: 1530-437X**

**Description**

## DOMAINE TECHNIQUE

L'invention se rapporte au domaine des dispositifs de détection et/ou de mesure d'humidité, en particulier aux capteurs d'humidité de type capacitif.

Elle concerne un dispositif capteur d'humidité amélioré à matériau diélectrique nano-poreux permettant de détecter de faibles taux d'humidité, ainsi qu'un procédé de réalisation d'un tel capteur.

Elle prévoit également un dispositif de mesure d'humidité différentiel utilisant un tel capteur.

L'invention s'applique notamment à la détection d'humidité dans des composants encapsulés tels que des circuits intégrés, des MEMS ou des NEMS.

## ÉTAT DE LA TECHNIQUE ANTÉRIEURE

Un nombre important de techniques et de composants existent pour effectuer une mesure de taux d'humidité.

Les composants utilisés sont généralement adaptés à des mesures d'humidité relatives entre 0 % et 100 % HR.

On appellera tout au long de la présente description, humidité relative HR, le rapport entre la quantité de vapeur d'eau contenue dans un milieu donné et la quantité qui pourrait y être contenue au maximum (point de saturation) à une température donnée, ce rapport étant exprimé par un chiffre HR variant de 0 à 100.

Les dispositifs de mesure d'humidité prévus pour effectuer des mesures de 0 à 100 % HR couramment utilisés sont : l'hygromètre à chlorure de lithium, le psychromètre, le spectroscope de masse, l'hygromètre à condensation, les dispositifs de mesures d'humidité par mesure de variation d'impédance.

La mesure d'humidité relative par mesure de variation d'impédance est la plus couramment utilisée, car la plus simple à mettre en oeuvre.

On retrouve en particulier deux catégories de capteurs à variation d'impédance.

Il existe tout d'abord des capteurs à variation de résistance, pour lesquels on mesure la variation de conductivité d'une surface.

On distingue également les capteurs de type capacitif pour lesquels une couche de matériau diélectrique sensible est prévue pour absorber l'humidité environnante. Dans un tel capteur, la couche de matériau diélectrique est localisée entre deux électrodes et forme un condensateur. Lorsque l'humidité varie, la quantité d'eau absorbée par ladite couche de matériau diélectrique varie également, ce qui entraine une modification de la constante diélectrique de cette couche, et une variation de la capacité du condensateur, que l'on mesure. Cette variation peut être importante du fait de la valeur élevée de la constante diélectrique de l'eau qui est de l'ordre de 80.

Dans un capteur de type capacitif, les électrodes du condensateur peuvent être par exemple sous forme de peignes, réalisés en métal tel que par exemple de l'AlCu, de l'AlSi, ou du CrNiAu. Les 2 électrodes du condensateur peuvent être réparties dans un même plan, par exemple tel que cela est décrit dans le document US 2004/0177685 ou dans le document US 2003/0179805. Dans le document US 6 356 087, un capteur capacitif doté d'électrodes réparties dans des plans différents et en regard l'une de l'autre est décrit.

Dans un capteur d'humidité de type capacitif, une des électrodes peut être perméable à l'humidité afin de laisser migrer la vapeur d'eau dans la couche de matériau diélectrique du condensateur. Cette électrode perméable peut avoir une épaisseur faible, par exemple de l'ordre de 10 à 20 nm, et peut être par exemple à base d'or, ou de Cr contraint de manière à provoquer des fissures dans le matériau et à favoriser ainsi une diffusion plus rapide de la vapeur d'eau afin d'améliorer le temps de réponse du capteur.

Un exemple de capteur d'humidité, à base de polymère, avec une électrode supérieure en Cr est donné dans le document FR 2 486 656 et dans le document : « Polymer Based Capacitive Hygrometers », H. Grange and G. Delapierre, Chemical Sensor Technology, Vol. 3, N. Yamazoe, ed., Kodansha Ltd., pp. 147-162, (1991).

De manière générale, les principaux critères recherchés pour un capteur d'humidité sont :

- un temps de réponse très court,
- une réponse linéaire en fonction de l'humidité relative (HR) entre 0 et 100 % HR,
- un faible hystérésis,
- un faible coefficient de température,
- une plage de fonctionnement en température importante, de préférence comprise entre -20°C à 80°C,
- une stabilité dans le temps des mesures, y compris dans un milieu agressif.

Certains capteurs d'humidité sont prévus pour mesurer de très faibles taux d'humidité : typiquement de 10 ppm (0.001 %) à 1000 ppm (0.1 %).

A titre d'exemple, une valeur de taux d'humidité de 40 % HR à 23 °C dans l'air, correspond à une proportion d'eau de 1 % ou 10000 ppm dans l'air.

Pour certaines applications, une mesure précise ou une détection précise de faibles quantités d'humidité peut s'avérer nécessaire.

Parmi les techniques utilisées pour effectuer une telle détection, figure la spectrométrie de masse. Cette méthode n'est pas simple d'utilisation et n'est pas utilisable à l'échelle industrielle.

Des capteurs à conductivité de surface peuvent être également utilisés pour des mesures de faible hygrométrie. Le principe de la mesure repose alors sur la détection d'un courant de fuite inter-électrodes d'un capteur polarisé et soumis à un cycle thermique de refroidissement. Le point de rosée correspond au démarrage de la conduction. La température correspondante peut être convertie en teneur d'humidité en ppmv. Cette méthode a pour inconvénient de nécessiter la mise en place d'un système de refroidissement au niveau du composant pour obtenir une diminution progressive de la température de surface.

Le document : « Porous Silicon Oxide layer formation by the electrochemical treatment of a porous silicon layer" de Yamana et al. Electrochemical society, vol.137, 1990 présente un capteur d'humidité prévu pour des mesures de faible hygrométrie et comportant une couche de $SiO_2$ microporeux.

Dans le document : « Sub ppm trace moisture detection with a simple thermally carbonized porous silicon sensor », de Salonen et al. Elsevier, 2005, un capteur d'humidité destiné à réaliser des mesures de faible taux d'humidité, et doté d'une couche microporeuse à base de SiC est également divulgué.

Dans l'un ou l'autre de ces capteurs, compte tenu de la taille des pores, la saturation en eau n'est pas atteinte pour des humidités intermédiaires entre 55 % et 97 %. En dessous de 55 % de HR, la sensibilité des capteurs n'est pas satisfaisante.

Selon le document "Studies on Hysteresis Reduction in Thermally Carbonized Porous Silicon Humidity Sensor", de Björkqvist et al., un capteur d'humidité de type capacitif est doté d'une couche de silicium poreux (diamètre des pores de 1 à 23 nm), originairement hydrophobe mais ayant subi un traitement hydrophile.

Le document WO-2007/036922 décrit un capteur d'humidité de type capacitif doté d'une couche à base de SiCOH.

Il se pose le problème de trouver un nouveau capteur d'humidité, de sensibilité améliorée, prévu pour la détection de faibles taux d'humidité, et qui ne comporte pas les inconvénients évoqués précédemment.

## EXPOSÉ DE L'INVENTION

L'invention concerne la réalisation d'un dispositif de détection et/ou la mesure d'humidité à forte sensibilité, en particulier pour la détection et/ou la mesure de faibles taux d'humidité.

Par « faible taux d'humidité », on entend une humidité relative inférieure à 55 % HR et plus particulièrement inférieure à 20 % HR.

Pour cela l'invention propose un capteur de type capacitif tel que défini dans la revendication 1, comportant au moins un matériau diélectrique disposé entre au moins une première électrode et une deuxième électrode, avec des pores de rayon inférieur à 2 nm.

Un tel diélectrique permet d'obtenir une sensibilité améliorée.

Le diélectrique nanoporeux est un diélectrique « low-k » tel que ceux habituellement utilisés dans le domaine des interconnexions.

Le diélectrique nanoporeux est du MSQ ou du SiOCH. De tels matériaux diélectriques nanoporeux ont une grande sensibilité à faible humidité entre 0 et 20 % d'humidité relative.

Le matériau nano-poreux comporte des sites hydrophiles. Le matériau nano-poreux a subi un traitement pour le rendre hydrophile ou davantage hydrophile. Un traitement hydrophile par oxydation du matériau nano-poreux peut pour cela avoir été réalisé.

Une telle oxydation du matériau nano-poreux peut être réalisé par un traitement plasma oxydant. Un plasma à l'aide de $N_2O$ peut avantageusement être utilisé.

Les sites hydrophiles peuvent être par exemple de type SiO, SiOH ou Si* (Si radicalaire), en particulier lorsque le diélectrique nanoporeux est du MSQ ou du SiOCH.

En augmentant le caractère hydrophile du capteur, on augmente ainsi la sensibilité de ce dernier.

Le capteur comprend en outre au moins une électrode flottante perméable à l'humidité et reposant sur le matériau nanoporeux, l'électrode flottante étant située en regard de ladite première électrode et de ladite deuxième électrode.

Une application du capteur est la détection de fuites dans les composants encapsulés de type circuits intégrés, MEMS ou NEMS et comprenant une cavité fermée ou scellée dans laquelle on effectue une mesure d'humidité.

Selon une possibilité de mise en oeuvre, le capteur peut comprendre plusieurs couches de matériaux nanoporeux différents entre les électrodes.

L'invention concerne également un dispositif de mesure ou de détection d'humidité, comprenant un capteur de type capacitif tel que défini dans la revendication 1, comportant au moins un matériau diélectrique nanoporeux disposé entre au moins une première électrode et une deuxième électrode, et un condensateur comprenant un matériau diélectrique non-poreux.

Le matériau diélectrique nano-poreux comporte des pores de rayon inférieur à 2 nm.

Par diélectrique matériau diélectrique non-poreux, on entend qui ne comporte pas de porosité ouverte.

Le condensateur peut être agencé de sorte qu'il partage une électrode commune avec ledit capteur capacitif.

Ledit matériau diélectrique nano-poreux du capteur dudit dispositif est du MSQ ou du SiOCH.

Ledit matériau diélectrique nano-poreux peut avoir subi un traitement hydrophile à l'aide d'un plasma oxydant.

L'invention concerne également un procédé de réalisation d'un capteur d'humidité de type capacitif, comprenant :

- la formation sur un support d'au moins une première électrode et d'au moins une deuxième électrode,
- la formation d'au moins un matériau diélectrique nano-poreux au moins entre ladite première électrode et ladite deuxième électrode, ledit matériau diélectrique nano-poreux comportant des pores de rayon inférieur à 2 nanomètres.

Le matériau diélectrique nano-poreux peut être du MSQ ou du SiOCH.

Le procédé comprend en outre : la création de sites hydrophiles sur ledit matériau nano-poreux.

Cette étape peut être réalisée en effectuant une étape de traitement, par exemple d'oxydation du matériau nanoporeux.

La création de sites hydrophiles sur ledit matériau nano-poreux peut être réalisée par oxydation dudit matériau à l'aide d'un plasma $N_2O$.

Le procédé comprend en outre : la réalisation d'au moins une électrode flottante perméable à l'humidité sur le matériau nanoporeux, et située en regard de ladite première électrode et de ladite deuxième électrode.

## BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :

- les figures 1A et 1B, illustrent un premier exemple d'agencement de capteur d'humidité de type capacitif, avec au moins un condensateur doté d'électrodes sous forme de peignes et d'un matériau diélectrique nanoporeux situé entre les dents des peignes,
- les figures 2A et 2B, illustrent un deuxième exemple d'agencement de capteur d'humidité de type capacitif, avec au moins un condensateur doté d'électrodes sous forme de peignes et d'un matériau diélectrique nanoporeux situé entre, et sur, les dents desdits peignes,
- les figures 3A et 3B, illustrent un troisième exemple d'agencement de capteur d'humidité de type capacitif, avec au moins un condensateur doté d'électrodes sous forme de peignes et d'une électrode flottante, le capteur comportant un matériau diélectrique nanoporeux situé entre l'électrode flottante et les électrodes sous forme de peigne,
- les figures 4A et 4B, illustrent un premier exemple d'agencement de capteur d'humidité de type capacitif selon l'invention, avec au moins un condensateur doté d'électrodes sous forme de peignes, le capteur comportant un matériau diélectrique poreux situé entre une électrode flottante rectangulaire et les électrodes sous forme de peigne,
- les figures 5A et 5B, illustrent un deuxième exemple d'agencement de capteur d'humidité de type capacitif selon l'invention, avec au moins un condensateur doté d'électrodes de forme rectangulaires et d'une électrode flottante, le capteur comportant un matériau diélectrique nanoporeux situé entre l'électrode flottante et les électrodes sous forme de peigne,

- les figures 6A et 6B, donnent des courbes de répartition statistiques de pores dans un diélectrique SiOCH,
- les figures 7A et 7B, donnent des courbes de répartition statistiques de pores dans un diélectrique MSQ,
- les figures 8A à 8H, illustrent un exemple de procédé de réalisation d'un capteur d'humidité de type capacitif comportant un matériau diélectrique nanoporeux,
- les figures 9A à 9F, illustrent un autre exemple de procédé de réalisation d'un capteur d'humidité de type capacitif comportant un matériau diélectrique nanoporeux,
- les figures 10 et 11, illustrent différents résultats de tests effectués sur des exemples de capteurs d'humidité mis en oeuvre suivant l'invention ;
- la figure 12 illustre un exemple de dispositif de mesure d'humidité différentiel comportant un capteur capacitif à diélectrique nanoporeux et un condensateur à diélectrique non-poreux.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

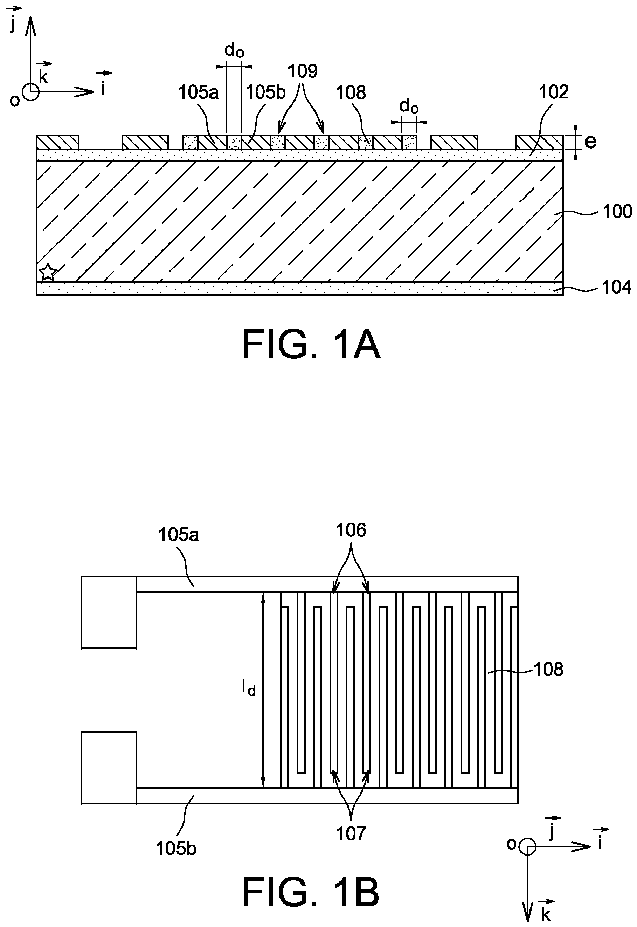

Un exemple de capteur d'humidité de type capacitif utile pour comprendre l'invention est donné sur les figures 1A-1B.

Le capteur d'humidité est formé sur un support ou une plaque 100, qui peut être à base de matériau semi-conducteur, par exemple tel que du Si.

Le support 100 est recouvert de couches isolantes 102, 104, respectivement sur sa face supérieure et sur sa face inférieure. Ces couches isolantes 102, 104 peuvent être formées par exemple par oxydation thermique du support.

Le capteur comprend des électrodes 105a, 105b d'au moins un condensateur, qui peuvent comporter chacune un motif en forme de peigne. Sur la figure 1B, les électrodes 105a, 105b sous forme de peignes ont des dents (respectivement référencées 106 et 107) interdigitées.

La couche isolante 102 formée sur la surface supérieure du support peut permettre d'éviter la formation de courts circuits entre les électrodes.

Un matériau diélectrique 108 nanoporeux est situé entre les électrodes 105a, 105b et réparti dans cet exemple, dans le même plan que ces dernières. Ainsi, l'épaisseur e de la couche 109 de matériau diélectrique 108 nanoporeux et celle des électrodes 105a, 105b sont sensiblement égales (l'épaisseur e étant une dimension mesurée selon une direction parallèle au vecteur $\vec{j}$ du repère orthogonal [O$;\vec{i};\vec{j};\vec{k}$] défini sur les figures 1A et 1B). La couche 109 de matériau diélectrique 108 nanoporeux peut avoir une épaisseur e comprise par exemple entre 100 nanomètres et 500 nanomètres, par exemple de l'ordre de 150 nanomètres.

Lorsque le taux d'humidité change dans l'atmosphère environnant le condensateur, la constante diélectrique de la couche 109 de matériau diélectrique 108 qui adsorbe l'humidité est modifiée en fonction de la quantité d'eau absorbée. Cette variation peut être importante même lorsque le taux d'humidité est faible, dans la mesure où la constante diélectrique de l'eau ($\varepsilon$ = 80) est très supérieure à celle du matériau diélectrique 108 choisi.

Le matériau diélectrique nanoporeux 108 peut en effet avoir une constante diélectrique $\varepsilon$ inférieure à 5, par exemple de l'ordre de 3.

Le matériau diélectrique 108 a une porosité ouverte importante par exemple de 30 % à 50 %, avec une taille des pores prévue légèrement supérieure à celle de la molécule d'eau, qui a un rayon de 0,132 nm.

Le matériau diélectrique 108 nanoporeux est un matériau prévu avec des pores de rayon maximal inférieur à 2 nanomètres. Les pores du matériau nanoporeux 108 ont par exemple un rayon moyen compris entre 0,2 nanomètres et 1,5 nanomètres. Le matériau nanoporeux 108 peut être du SiOCH ou du méthylsilsesquioxane (MSQ).

Le matériau nanoporeux 108 peut avoir subi un traitement hydrophile à l'aide d'un plasma à base de $N_2O$. Un tel traitement peut permettre d'obtenir des pores du matériau nanoporeux 108 par exemple de l'ordre de 0,6 nanomètres dans le cas où le matériau nano-poreux 108 est du SiOCH. Une porosité ouverte de l'ordre de 32 % peut être par exemple également obtenue à l'aide d'un tel traitement.

Le traitement hydrophile à l'aide du plasma $N_2O$ peut permettre d'obtenir un matériau nano-poreux 108 avec des pores de rayon moyen par exemple de l'ordre de 0,7 nanomètres dans le cas où le matériau nano-poreux 108 est du MSQ. Dans ce cas, une porosité ouverte par exemple de l'ordre de 46 % peut être également obtenue par ce traitement hydrophile.

Dans cet agencement, la couche 109 de matériau diélectrique nanoporeux 108 ne dépassant pas de la surface des électrodes 105a, 105b, la variation d'eau contenue dans ce diélectrique 108 peut être intégralement mesurée. L'humidité est en effet entièrement localisée entre les dents 106, 107 des peignes. La valeur de la capacité du condensateur dépend des paramètres indiqués dans la formule suivante :

$$(1) \qquad C = \frac{\varepsilon_0 \varepsilon r S}{d_0}$$

Avec,

S : la surface des électrodes, (S=h*ld*Ne)
$d_0$ : entrefer ou distance entre les dents des électrodes,
$\varepsilon_0$: la permittivité diélectrique du vide,
$\varepsilon r$ : la permittivité du matériau poreux,
e : l'épaisseur des électrodes,
h : la hauteur des dents,
ld : la longueur des dents des peignes,
Nd : Nombre total de dents des peignes,
Ne : le nombre d'entrefers (Ne = Nd-1).

Avec un tel condensateur, la capacité est d'autant plus élevée que la valeur de la distance entre les dents 106, 107 des peignes est faible. Les entrefers peuvent être de l'ordre de 1 à 2 $\mu$m. Le nombre Nd et la longueur ld des dents des peignes peuvent être prévus par exemple pour obtenir une capacité du condensateur de l'ordre de un à plusieurs pF correspondant à une couche diélectrique du condensateur qui n'est pas chargée d'eau.

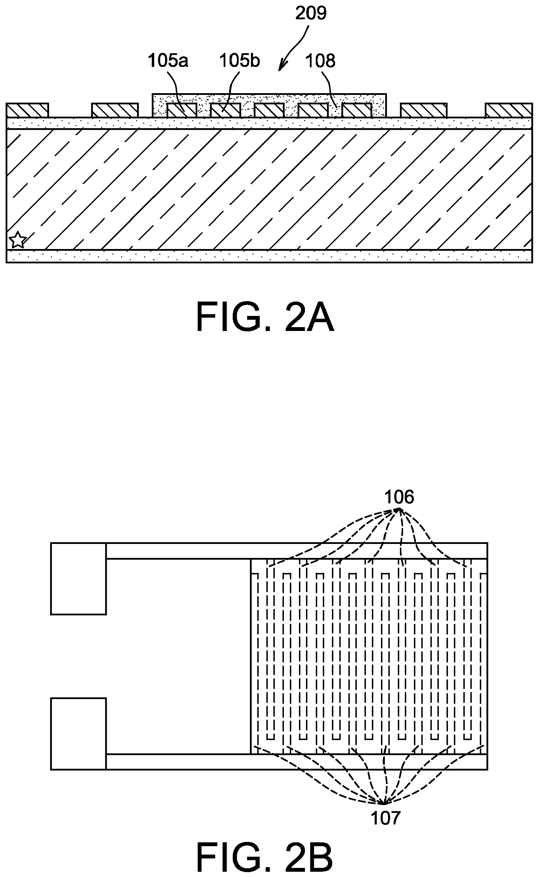

Sur les figures 2A et 2B, un autre exemple de capteur d'humidité capacitif, utile pour comprendre l'invention, est donné.

Dans cet autre exemple, le matériau diélectrique nanoporeux 108 a une répartition différente de celle de l'exemple précédemment décrit et se trouve sous forme d'une couche 209 recouvrant les dents 106, 107 des électrodes 105a et 105b (figures 2A et 2B). La porosité ouverte importante du matériau 108 permet à l'eau de diffuser entre les dents 106, 107.

Par « porosité ouverte », on entend que les pores du matériau sont susceptibles de communiquer entre eux et avec l'extérieur du matériau.

Selon un exemple de dimension de l'un ou l'autre des capteurs qui viennent d'être décrits, la longueur des doigts des peignes peut être par exemple de l'ordre de 1000 $\mu$m, le nombre de doigts interdigités peut être par exemple de l'ordre de 300, la distance des entrefers peut être par exemple de l'ordre de 1.5 $\mu$m.

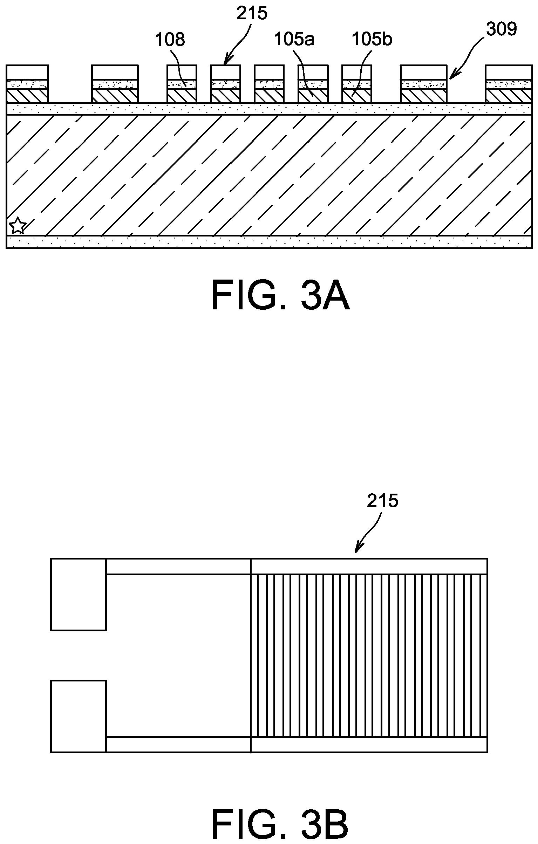

Sur les figures 3A et 3B, un exemple de mise en oeuvre d'un autre capteur d'humidité, utile pour comprendre l'invention, est donné. Dans cet exemple, le capteur comporte en outre une électrode supplémentaire, sous forme d'une électrode flottante 215. L'électrode flottante 215 est prévue au dessus d'une portion des électrodes 105a, 105b et en particulier au dessus des dents 106, 107 des peignes.

Dans ce cas, le matériau diélectrique 108 nanoporeux peut être réparti sous forme d'au moins un bloc 309 reposant sur les électrodes 105a, 105b et situés entre ces dernières et l'électrode flottante 215. L'électrode flottante 215 a une composition et une épaisseur prévues pour la rendre perméable à l'humidité.

L'électrode flottante 215 peut être par exemple à base de Cr ou d'Au et avoir une épaisseur faible, par exemple comprise entre 5 nanomètres et 20 nanomètres, par exemple de l'ordre de 10 nanomètres. L'électrode supérieure flottante 215 est prévue avec une épaisseur permettant d'atteindre une conductivité électrique tout en conservant une perméabilité suffisante.

L'électrode flottante 215 peut avoir un motif ou suivre un dessin reprenant celui d'une partie des électrodes 105a, et 105b, en particulier de la partie des électrodes 105a, 105b sous forme de peigne.

Le bloc 309 de matériau diélectrique 108 peut également suivre le dessin ou le motif de l'électrode flottante 215.

Un tel capteur est prévu de sorte que l'humidité peut pénétrer dans le diélectrique poreux 108 à travers l'électrode 215 flottante et par les flancs du bloc 309 de diélectrique poreux 108.

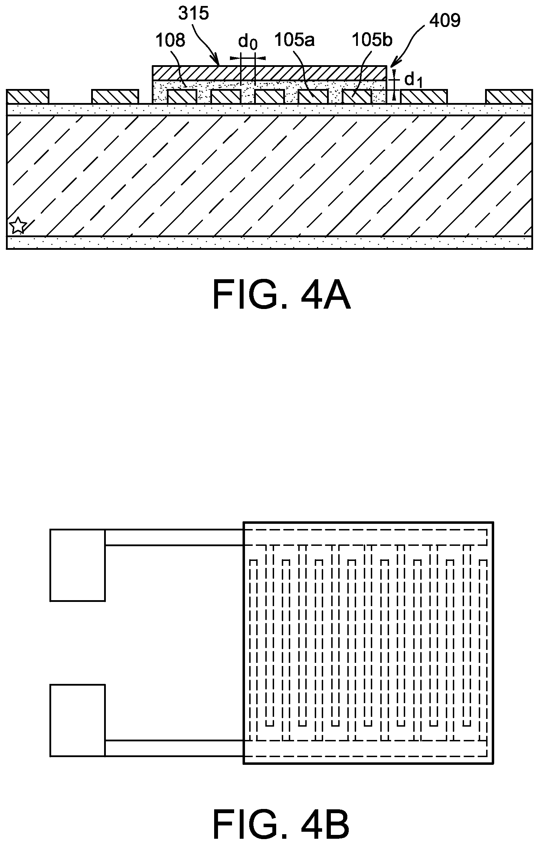

Sur les figures 4A et 4B, un premier exemple de capteur selon l'invention est représenté.

Dans cet exemple, le capteur est doté d'une électrode supérieure flottante 315 perméable formée d'une zone métallique rectangulaire, qui repose sur un bloc 409 à base du matériau diélectrique poreux 108. Le bloc 409 de matériau diélectrique peut suivre le même motif que celui de l'électrode 315, et recouvre les électrodes 105a, 105b en forme de peigne.

Dans ce cas, l'humidité pénètre dans le diélectrique 108 à travers l'électrode 315 perméable.

Une variation de capacité du condensateur due à une variation de taux d'humidité dans le diélectrique 108 a deux composantes : une première composante due à la variation de constante diélectrique du matériau 108 dans un espace $d_0$ situé entre les dents 106, 107 des électrodes 105a, 105b et une autre composante due à la variation de constante diélectrique du matériau diélectrique 108 suivant l'espace $d_1$ entre les peignes des électrodes 105a, 105b et de l'électrode 315 flottante.

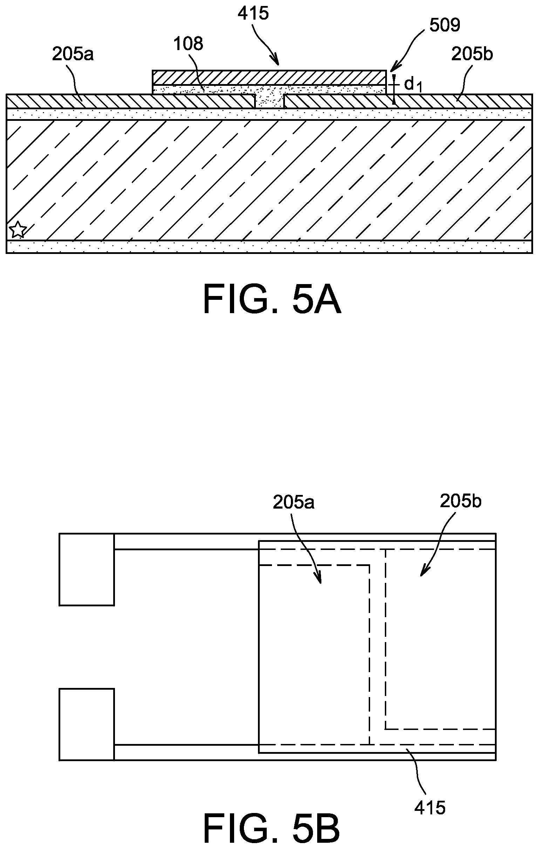

Un autre exemple de capteur selon l'invention est représenté sur les figures 5A et 5B.

Dans cet exemple, deux électrodes 205a, 205b de forme rectangulaire sont formées sur la couche isolante 102 du support 100 et sont séparées par une zone d'un bloc 509 de matériau diélectrique 108 nanoporeux. Le bloc 509 de matériau diélectrique 108 nanoporeux recouvre également une partie des électrodes 205a, 205b. Sur le bloc 509 de matériau diélectrique 108 repose également une électrode flottante 415 perméable, qui peut être de forme rectangulaire. Dans cet exemple, la variation de capacité due à l'humidité a une seule composante due à la variation de $\varepsilon$ suivant l'espace $d_1$ entre le dessus des électrodes 205a, 205b inférieures, et celui de l'électrode 415 flottante.

Pour la mise en oeuvre de l'un ou l'autre des dispositifs précédemment décrits, le matériau diélectrique nano-poreux 108 peut avoir été formé par dépôt, par exemple par CVD (CVD pour « Chemical Vapour Deposition » ou « dépôt chimique en phase vapeur »), dans le cas par exemple où ce matériau est du SiOCH, ou par un procédé d'étalement à la tournette suivi d'un recuit dans le cas, par exemple, où ce matériau est du MSQ.

Ensuite, un ou plusieurs motifs est ou sont réalisé (s) dans le matériau 108 par exemple par formation d'un masquage tel qu'un masquage en résine, puis gravure à travers ce masquage.

Un retrait du masquage en résine peut être ensuite effectué par un procédé de décapage (« stripping » selon la terminologie anglo-saxonne. Ce décapage peut être réalisé à l'aide d'un plasma RIE à base d'oxygène et d'argon, pour retirer une partie de la résine puis d'un plasma à base d'hélium et d'hydrogène pour retirer le reste de la résine sans endommager le matériau nano-poreux.

Dans le cas où le matériau nano-poreux 108 est du SiOCH, celui-ci peut être formé l'aide d'une approche qui consiste en un co-dépôt d'un précurseur d'une matrice organique et d'un matériau sacrificel porogène, par dépôt chimique en phase vapeur à l'aide d'un plasma (PECVD), suivi d'un traitement pour éliminer la phase organique porogène. Un matériau 108 à base de SiOCH, doté de pores de rayon moyen par exemple de l'ordre de 0.8 nanomètres et de porosité de l'ordre 34 % peut être alors obtenu.

Dans le cas où le matériau nano-poreux 108 est du MSQ, celui-ci peut être formé l'aide d'une solution de polymethyselsisquioxane (MSQ) mélangé à un porogène organique à base de méthacrylate dans une solution d'acétate de méthylpropylèneglycol (PGMEA) déposée par exemple par dépôt à la tournette (en anglais « spin coating »).

Un matériau 108 à base de MSQ, doté de pores de rayon moyen par exemple de l'ordre de 1.2 nanomètres et de porosité de l'ordre 46 % peut être alors obtenu.

Une fois le matériau 108 déposé, un traitement hydrophile, pour créer des sites hydrophiles sur le matériau 108 nanoporeux peut être réalisé.

Pour cela, un traitement par plasma oxydant, par exemple par plasma $N_2O$, ou par plasma $CO_2$, ou par plasma $O_2$, pur ou dilué dans Ar, $N_2$, He. On peut ainsi réduire la taille des pores et la porosité ouverte.

Le matériau ainsi traité a une très grande surface développée, c'est-à-dire une surface totale des pores qui permet d'avoir un très grand nombre de sites d'adsorption qui seront occupés par la première couche adsorbée ou couche de Langmuir (couche mono-moléculaire recouvrant une surface) et qui est généralement complète pour une humidité relative < 20 % HR. Les pores du matériau 108 peuvent être saturées pour une humidité relative inférieure à 50 ou à 55 %.

Un matériau nanoporeux 108 à base de MSQ ou de SiOCH, permet d'obtenir une très grande sensibilité du capteur pour de très faibles quantités d'eau (de l'ordre de plusieurs ppm ou de plusieurs ppb).

La sensibilité du capteur suivant l'invention comportant une couche à base du matériau nanoporeux 108 est plus élevée que celle des capteurs suivant l'art antérieur à matériau mésoporeux ou microporeux, en particulier pour les mesures de faibles taux d'humidité, allant par exemple de 0 à 20 % HR, en particulier de 0 à 10 % HR.

Le matériau nanoporeux 108 a un mécanisme d'adsorption spécifique. Ce mécanisme d'adsorption, peut être mono et poly-moléculaire.

La quantité d'eau adsorbée dans les pores du matériau nanoporeux 108, peut être estimée à l'aide de l'équation BET (BET pour « Brunauer, Emmett, Teller ») suivante :

$$\frac{N}{Nm} = \frac{1}{1 - P/Po} - \frac{1}{1 + (P/Po)(Q - 1)}$$

N : quantité absolue de gaz adsorbée (en moles)
Nm : quantité de gaz adsorbée par monocouche (en moles)

$$Q = \exp[\frac{(q - qc)}{RT}]$$

q : chaleur d'adsorption
qc : chaleur de condensation
R : constante des gaz parfait
T : température
P : pression
P0 : pression de vapeur saturante à la Température T.

Cette équation décrit l'adsorption polymoléculaire et peut permettre de définir le nombre de couches adsorbées à une pression donnée.

Le matériau nanoporeux 108 ayant des pores de rayon moyen de l'ordre du nanomètre, ce matériau est saturé bien avant d'atteindre 50 à 55 % HR.

Suivant un aspect de l'invention, un capteur capacitif d'humidité tel que décrit précédemment, et comprenant un matériau diélectrique nanoporeux 108 et hydrophile, peut être utilisé par exemple pour effectuer une détection de fuites dans des composants ou des dispositifs électroniques encapsulés ou scellés, par exemple dans un accéléromètre ou un capteur de pression, protégés par un capot.

Comme cela a été indiqué précédemment, le matériau diélectrique poreux 108 peut être par exemple du SiOCH.

Un exemple de procédé de réalisation d'une couche de matériau nanoporeux à base de SiOCH va être donné.

On peut former ce matériau par PECVD (PECVD pour « plasma enhanced chemical vapour deposition »), de préférence en utilisant un procédé dit « porogène ».

Pour cela on peut déposer un matériau comprenant deux phases : une première phase à base de Si, O, C, H et qui est destinée à former le squelette du matériau diélectrique poreux, et une deuxième phase organique dite « porogène » à base de C, H et éventuellement O, et qui a le rôle d'une phase sacrificielle. La phase sacrificielle est dégradée lors d'un traitement qui conduit à la formation d'une couche mince nanoporeuse.

Les précurseurs utilisés lors du dépôt peuvent être par exemple du diéthoxyméthylsilane pour la phase destinée à former le squelette et du trivertal® fabriqué par la société P.C.A.S., pour la phase porogène.

Selon un exemple, les conditions de dépôt peuvent être, pour un réacteur capacitif adapté à des supports (« wafer » selon la terminologie anglo-saxonne) de 200 mm : une pression par exemple de l'ordre de 7 torr, une puissance de l'ordre de 350 W, une température de dépôt par exemple de l'ordre de 200°C. Un traitement de recuit en four peut être ensuite effectué, par exemple à une température de l'ordre de 450 °C, pour une durée par exemple de l'ordre de 8h00.

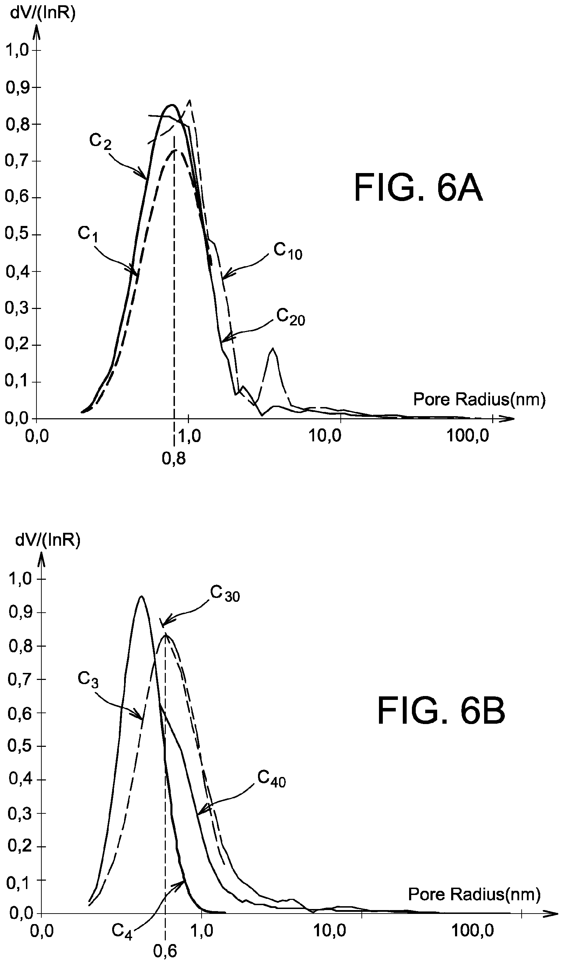

On peut obtenir une porosité ouverte mesurée sur une couche de SiOCH par exemple de 0,35 $\mu$m d'épaisseur de l'ordre de 34 % avec un rayon moyen des pores de l'ordre de 0,8 nm (figure 6A par exemple).

La couche de matériau nanoporeux à base de SiOCH peut subir ensuite un traitement pour le rendre hydrophile.

Sur la figure 6A, des courbes C1 et C2 donnent la répartition du rayon des pores dans un matériau poreux à base de SiOCH, respectivement dans le cas de l'adsorption (courbe C1) et de la désorption (courbe C2).

Les courbes représentent la répartition statistique des pores de différents rayons en fonction du rayon. Le sommet de ces courbes de Gauss est centré sur le rayon moyen des pores.

La courbe C1 représente cette répartition calculée à partir de mesures d'adsorption d'un liquide de mesure tel que le Toluène.

La courbe C2 représente cette répartition calculée à partir de mesures de désorption d'un liquide de mesure tel que le Toluène.

Des courbes C10 et C20 correspondent à la taille des pores calculée à partir de la loi de Kelvin.

Les courbes représentent une répartition statistique de la taille des pores, avec dV/d(lnR), la probabilité de présence des pores de rayon donné.

Le traitement, pour créer des sites hydrophiles sur le matériau nanoporeux 108, peut être un traitement plasma $N_2O$ utilisé par exemple pour effectuer le traitement hydrophile du matériau nanoporeux.

Après traitement, une porosité ouverte de la couche nano-poreuse de l'ordre de 32 % peut être obtenue, avec un rayon moyen des pores de l'ordre de 0,6 nanomètres.

Sur la figure 6B, des courbes de mesure C3 et C4 donnent la répartition du rayon des pores dans un matériau poreux à base de SiOCH, une fois que ce matériau a subi un traitement hydrophile respectivement dans le cas de mesures de l'adsorption (courbe C3) et de mesures de la désorption (courbe C4).

Des courbes C30 et C40 correspondent à la taille des pores calculée à partir de la loi de Kelvin.

Les courbes représentent une répartition statistique de la taille des pores, avec dV/d(lnR), la probabilité de présence des pores de rayon donné.

Un exemple de procédé de réalisation d'une couche de matériau nanoporeux à base de MSQ va être donné.

Ce matériau peut être déposé par exemple par un procédé d'étalement à la tournette d'une solution contenant un matériau sacrificiel, par exemple du polymethyselsisquioxane et un porogène organique à base de méthacrylate, le tout en solution dans un solvant par exemple tel que du PGMEA (PGMEA pour « propylene glycol monomethyl ether acetate »).

Un recuit du matériau sur une plaque chauffante peut être ensuite effectué, par exemple à une première température, par exemple 100°C pendant une première durée, par exemple de 30 s, puis à une température plus élevée, par exemple 200°C pendant une durée par exemple de l'ordre de 4 min afin d'éliminer le solvant.

Ensuite, on place l'échantillon dans un four par exemple pendant 1h à une température qui peut être par exemple de l'ordre de 450°C. Le traitement effectué conduit à une extraction totale de la phase porogène et à la création de pores dans le matériau de rayon inférieur à 2 nanomètres.

On peut obtenir une porosité ouverte sur une couche de 0,35 $\mu$m d'épaisseur par exemple de l'ordre de 46,1 % avec un rayon moyen des pores de la couche adsorbée par exemple de l'ordre de 2.2 nm.

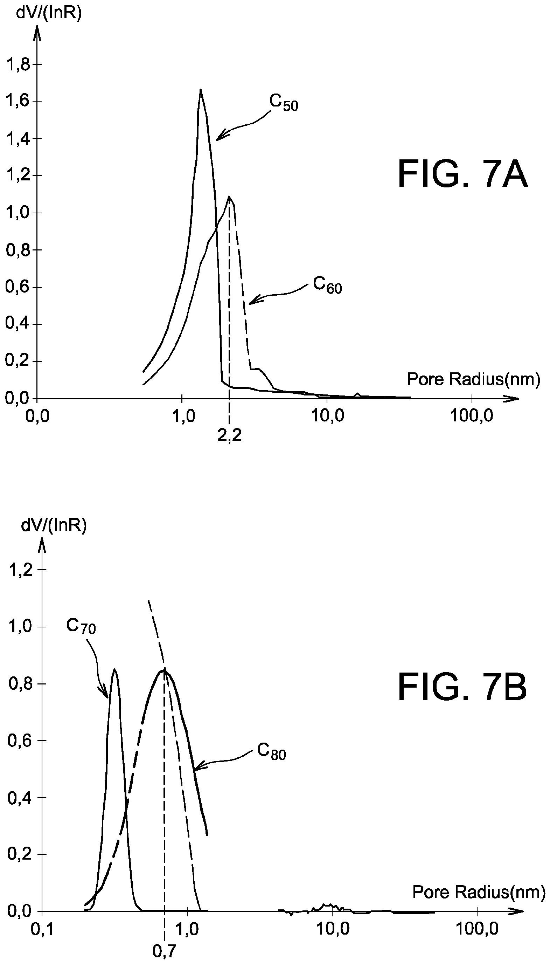

Sur la figure 7A, des courbes C50 et C60 donnent la répartition du rayon des pores dans un matériau poreux à base de MSQ.

On peut faire ensuite subir un traitement hydrophile au matériau MSQ.

Après ce traitement on peut obtenir une porosité ouverte par exemple de l'ordre de 35.8 %, avec un rayon moyen des pores de l'ordre de 0.7 nm.

Sur la figure 7B, des courbes C70 et C80 donnent la répartition du rayon des pores dans un matériau nanoporeux à base de MSQ après traitement hydrophile respectivement pour une mesure d'adsorption et de désorption de Toluène.

Les matériaux nanoporeux précités ont une grande surface développée c'est-à-dire une surface des pores élevée et un nombre de sites d'absorption élevé.

Une couche de matériau diélectrique 108 à base de MSQ ayant un taux de pores par exemple de l'ordre de 35,8 % et un diamètre de pores moyens par exemple de l'ordre de 1,4 nm peut être obtenue.

Une couche à base de matériau 108 nanoporeux telle que décrit précédemment, peut être saturée en eau dès l'adsorption de 2 à 3 couches moléculaires d'eau pour des valeurs d'humidité relative < 55 %.

Ainsi, une faible augmentation d'humidité dans l'environnement du matériau nanoporeux 108 permet d'obtenir une augmentation très importante de la constante diélectrique de la couche de matériau diélectrique 108 due à une forte concentration en eau dans le matériau nanoporeux, même à faible pression.

Cela permet de détecter très rapidement une fuite dans la cavité d'un composant encapsulé laissé dans un milieu où l'humidité est celle de l'atmosphère ambiante et qui correspond généralement à des valeurs de l'ordre de 20 à 60 % HR.

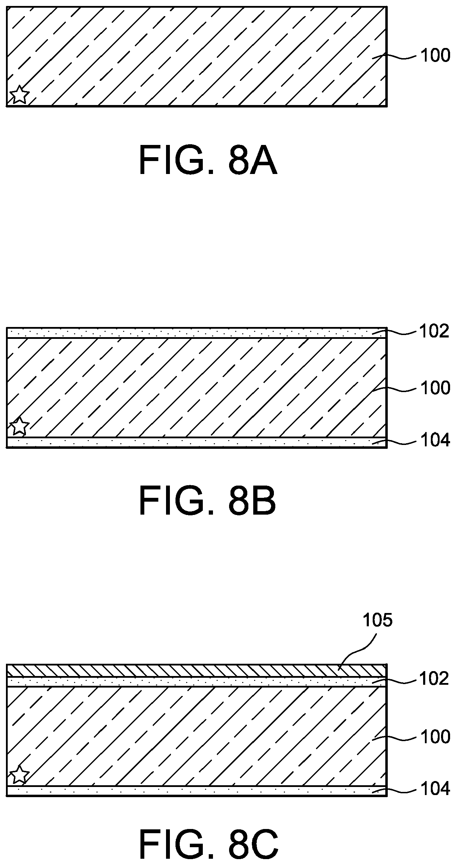

Un exemple de procédé de réalisation d'un capteur d'humidité de type capacitif, utile pour comprendre l'invention, va à présent être donné en liaison avec les figures 8A à 8H.

Le matériau de départ de ce procédé peut être un support 100 ou une plaque 100 (« wafer » selon la terminologie anglo-saxonne) de matériau semi-conducteur, par exemple une plaque de Si d'épaisseur de l'ordre de 525 $\mu$m, et qui peut comporter une face avant polie (figure 8A).

Ensuite, on forme une couche isolante sur chacune des faces du support. Ces couches isolantes 102, 104, peuvent être réalisées par exemple par oxydation du support 100, et peuvent avoir une épaisseur de l'ordre de plusieurs micromètres, par exemple de l'ordre de 2 $\mu$m (figure 8B).

Ensuite, on forme une ou plusieurs électrodes d'au moins un condensateur.

Pour cela, on effectue tout d'abord un dépôt d'une couche métallique 105 sur la couche isolante 102 (figure 8C). Le dépôt peut être par exemple à base d'AlCu d'épaisseur par exemple de l'ordre de 150 nanomètres, ou d'un empilement formé d'une couche de Cr par exemple de l'ordre de 10 nanomètres d'épaisseur et d'une couche d'or par exemple de l'ordre de 150 nanomètres.

Puis, on réalise des motifs dans la couche métallique 105, par exemple par photolithographie puis gravure.

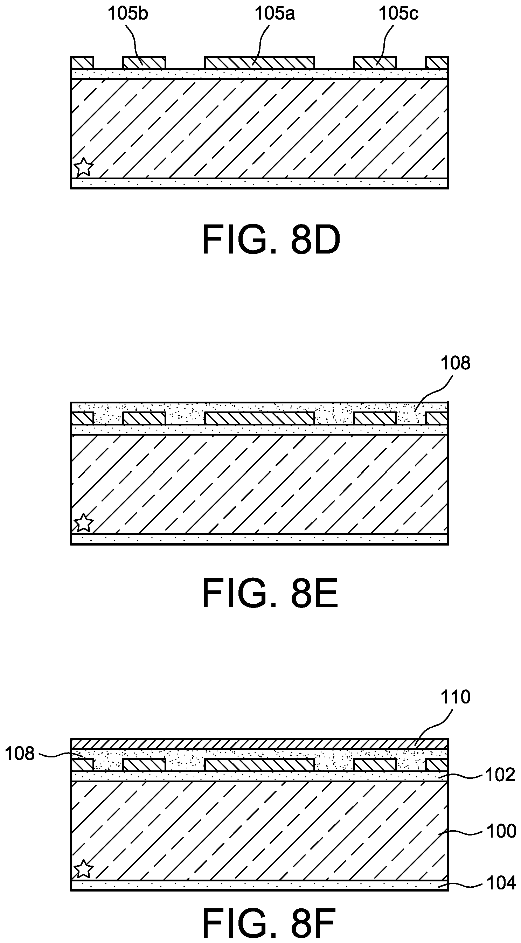

Des électrodes coplanaires 105a, 105b, par exemple sous forme de peignes interdigités peuvent être ainsi formés (figure 8D).

Ensuite, on forme une couche de matériau diélectrique nanoporeux 108 sur les électrodes métalliques, par exemple d'épaisseur comprise entre 250 et 500 nanomètres. Le matériau diélectrique poreux 108 est à base de SiOCH ou de MSQ, et peut être par exemple déposé par PECVD (PECVD pour « plasma enhanced chemical vapour deposition ») (figure 8E).

Le matériau nanoporeux est réalisé et prévu avec des pores de rayon compris entre 0,6 nanomètres et 2 nanomètres.

Le matériau nanoporeux peut être formé à l'aide d'un procédé tel que décrit précédemment.

Un traitement hydrophile du matériau nanoporeux 108 est ensuite réalisé A l'aide d'un plasma à base de $N_2O$.

On réalise ensuite un dépôt d'une fine couche de matériau métallique 110, par exemple à base d'or ou de Cr. La fine couche de matériau métallique 110, peut avoir une épaisseur comprise par exemple entre 5 et 20 nanomètres, par exemple de l'ordre de 10 nanomètres (figure 8F). L'épaisseur et le matériau de la couche métallique 110 peuvent être prévus pour rendre cette dernière perméable à l'humidité.

Une couche à base d'or par exemple de l'ordre de 10 nanomètres n'est pas parfaitement continue.

Une couche à base de Cr, et par exemple de l'ordre de 10 nanomètres, en particulier lorsqu'elle est déposée par évaporation sous vide est contrainte et à tendance à provoquer des fissures dans le matériau sur lequel elle est déposée. De telles fissures peuvent permettre à la vapeur d'eau de pénétrer.

Ensuite, on forme au moins une électrode supérieure dans la couche de matériau métallique 110 du condensateur. Pour cela, on effectue une gravure de la couche de matériau métallique 110 et de la couche de matériau nanoporeux.

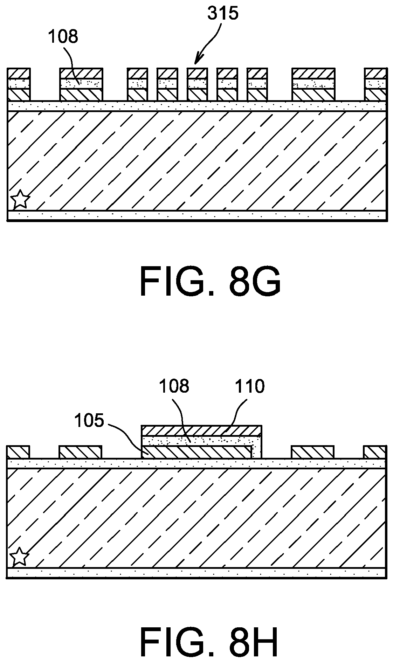

Selon une possibilité, des motifs en forme de peignes comportant des dents interdigités peuvent être réalisés dans ces couches 108, 110 (figure 8G).

Selon une variante, les électrodes peuvent être sous forme de motifs rectangulaires (figure 8H).

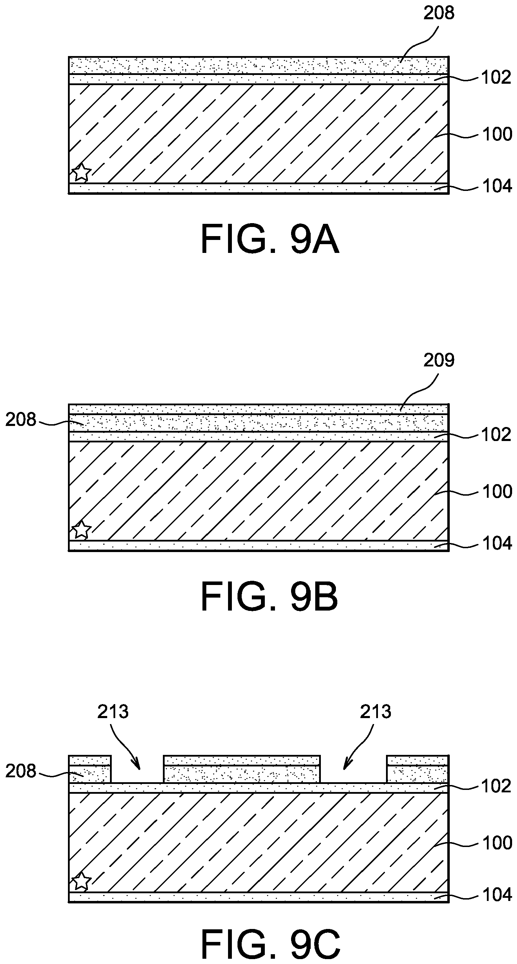

Une variante de l'exemple de procédé de réalisation de capteur d'humidité de type capacitif, utile pour comprendre l'invention, qui vient d'être décrit, va à présent être donnée en liaison avec les figures 9A à 9H.

Le matériau de départ de ce procédé peut être également un support 100 ou une plaque 100 (« wafer » selon la terminologie anglo-saxonne) de matériau semi-conducteur, sur laquelle, on forme de chaque côté des couches isolantes 102, 104.

Ensuite (figure 9A), on forme une couche de matériau diélectrique nanoporeux sur les électrodes métalliques, par exemple d'épaisseur comprise entre 250 et 500 nanomètres. Le matériau diélectrique poreux peut être par exemple à base de SiOCH ou de MSQ, et peut être par exemple réalisé à l'aide d'un procédé tel que décrit précédemment.

Le matériau nanoporeux est réalisé avec des pores de rayon compris entre 0,6 nanomètres et 2 nanomètres.

Un traitement hydrophile du matériau est ensuite effectué, par exemple sous plasma $N_2O$. L'oxydation peut se produire sur toute la surface des pores.

On forme ensuite une couche isolante 209 sur la couche 208 de matériau poreux. La couche isolante 210 peut être par exemple à base de $SiO_2$ de type TeOs et avoir une épaisseur par exemple de l'ordre de 100 nanomètres (figure 9B).

On réalise ensuite une pluralité d'ouvertures 213 dans la couche isolante 209 et dans la couche de matériau poreux 208, de manière à dévoiler la couche isolante 102 (figure 9C).

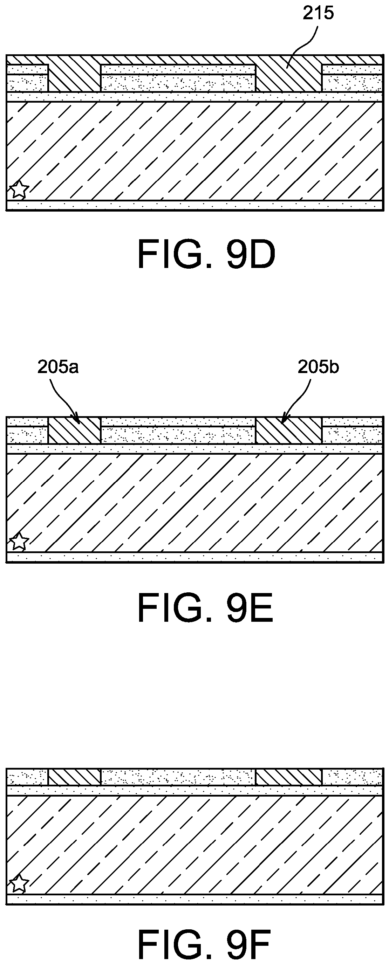

On effectue ensuite un remplissage des ouvertures à l'aide d'un matériau métallique 215, par exemple à base d'AlCu ou de Cu. Le matériau métallique peut avoir une épaisseur comprise par exemple entre 450 nanomètres et 800 nanomètres (figure 9D).

Puis, on effectue un polissage, par exemple par CMP (CMP pour « chemical mechanical polishing ») afin de retirer une épaisseur de matériau métallique 215 dépassant des ouvertures. Une épaisseur par exemple de l'ordre de 200 nanomètres peut être par exemple retirée, afin de former des électrodes métalliques 205a, 205b d'un condensateur (figure 9E).

La couche isolante 209 peut être ensuite retirée (figure 9F).

Un dispositif de mesure différentielle doté d'au moins une première capacité comportant le matériau diélectrique nano-poreux 108 et au moins une deuxième capacité comportant un matériau diélectrique de faible porosité ou non-poreux et servant de référence peut être également mis en oeuvre afin d'obtenir des mesures de précision améliorée.

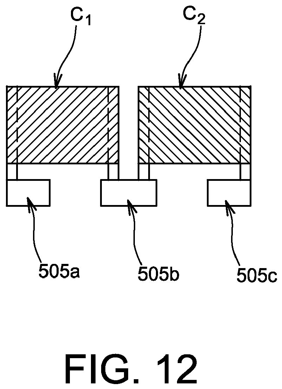

Sur la figure 12, un exemple d'un tel dispositif est donné. Dans cet exemple, une première capacité $C_1$ est dotée d'une couche de matériau diélectrique nano-poreux (non représenté sur la figure 22) tel que du MSQ ou du SiOCH, comportant des pores de rayon inférieur à 2 nanomètres et qui peut avoir subi un traitement hydrophile oxydant tel qu'un traitement à base de $N_2O$. Le diélectrique nano-poreux est situé entre une première électrode 505a et une deuxième électrode 505b, la deuxième électrode 505b étant une électrode commune, servant d'électrode de référence, et qui est partagée par une deuxième capacité $C_2$.

La deuxième capacité $C_2$ est dotée d'une couche d'un autre matériau diélectrique, non-poreux tel que du $SiO_2$ de type TEOS ou un polymère de type polyéthersulfone. Par matériau non-poreux, on entend un matériau qui ne comporte pas de porosité ouverte.

L'autre matériau diélectrique de la deuxième capacité $C_2$, est situé entre l'électrode commune 505b et une autre électrode 505c. La deuxième capacité $C_2$ est ainsi formée d'un matériau diélectrique dont les propriétés diélectriques ne sont pas modifiées pour les faibles variations d'humidité et en particulier entre 0 et 500 ppm. La deuxième capacité $C_2$ joue le rôle de capacité de référence.

Ainsi, lorsque l'humidité varie, la valeur de la première capacité $C_1$ change, tandis que la deuxième capacité $C_2$ reste invariante. Pour mesurer une variation d'humidité, on peut alors prendre en compte la variation $C_2$ - $C_1$ dans la gamme de 0 à 500 ppm.

Avec un tel dispositif de mesure différentielle, on peut s'affranchir de phénomènes parasites dits « de surface » et qui sont dus par exemple à de l'humidité sur les électrodes et/ou des pistes conductrices. Le matériau diélectrique de la capacité $C_2$ de référence peut être déposé par procédé LPCVD (LPCVD pour « Low Pressure Chemical Vapour Deposition ») à partir d'une source liquide de tetraethylorthosilicate et d'oxygène, la réaction étant réalisée à une température de l'ordre de 380°C.

Un capteur suivant l'invention peut être utilisé pour la détection de fuites dans les composants encapsulés, en particulier les composants électroniques ou microélectroniques ou les microsystèmes, par exemple dans les capteurs du type accéléromètre, gyromètre ou capteurs de pression protégés par un capot généralement en silicium scellé par un cordon de résine, verre fusible ou alliage eutectique ou par un capot intégré réalisé en polysilicium.

Pour ce type de composants généralement encapsulés sous vide ou sous $N_2$, le condensateur doté d'une couche de matériau diélectrique nano-poreux peut permettre de détecter des fuites dès les $1^{iers}$ ppm.

Un capteur d'humidité suivant l'invention peut être utilisé pour effectuer la mesure d'une quantité de vapeur d'eau contenue dans un gaz ou dans l'atmosphère d'un composant scellé ou fermé.

Le composant peut être un composant MEMS par exemple un accéléromètre ou un gyromètre ou un sismomètre.

Les applications d'un capteur suivant l'invention sont multiples. Parmi ces applications, on peut citer, outre la détection d'humidité dans des composants scellés : la mesure de l'humidité dans l'industrie de la céramique pour le contrôle du séchage des pièces avant cuisson, la mesure de l'humidité dans les papeteries, dans l'industrie alimentaire, dans l'industrie électronique et dans les domaines où l'on contrôle le séchage ou de préférence les faibles niveaux d'humidité.

Pour optimiser les performances en termes de sensibilité d'un capteur suivant l'invention intégré dans un composant encapsulé ou scellé, on met en oeuvre une désorption de l'humidité du matériau diélectrique nano-poreux préalablement au scellement ou à l'encapsulation car un matériau poreux contient une quantité d'eau qui peut être élevée à atmosphère ambiante. Cette désorption peut dépendre de l'humidité atmosphérique qui peut être par exemple < 30 %HR par temps froid en hiver et par exemple > 60 % HR en été. Une telle étape de désorption peut être réalisée par exemple par chauffage sous vide, par exemple à une température de l'ordre de 200°c et pompage.

Différents résultats de tests de sensibilité réalisés sur des exemples de capteurs d'humidité capacitifs suivant l'invention vont à présent être donnés.

Des tests ont été réalisés, à une température de l'ordre de 23°C en introduisant par paliers avec une pression croissante, de l'air contenant un pourcentage d'humidité relative de l'ordre de 50% dans une enceinte initialement sous vide, après traitement thermique de l'ordre de 200°C pendant une durée par exemple de l'ordre de 10 minutes. Chaque dispositif a été testé avec un appareil de type 4284A LCR de la société Hewlett Packard pour établir des courbes de variation de capacité $\Delta C/C$, en fonction de la concentration en humidité.

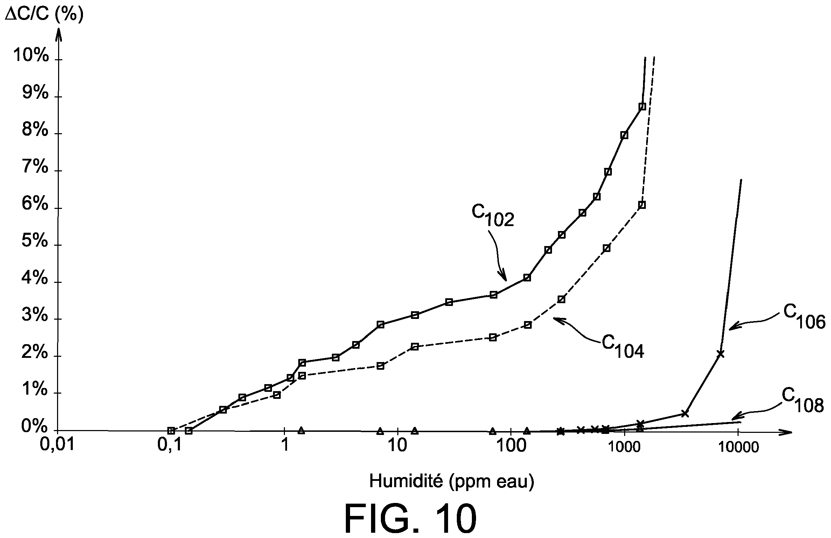

Sur la figure 10, les courbes $C_{102}$, $C_{104}$, sont représentatives d'essais à une fréquence de 1 kHz, menés respectivement, sur un capteur capacitif suivant l'invention, formé avec un diélectrique hydrophile nano-poreux à base de MSQ, et sur un capteur capacitif suivant l'invention, de structure semblable, mais doté d'un diélectrique hydrophile nano-poreux à base de SiOCH.

A titre de comparaison la courbe $C_{106}$, illustre la sensibilité d'un capteur semblable en termes d'agencement, mais doté d'un diélectrique TeOS, tandis que la courbe $C_{108}$, illustre la sensibilité d'un capteur doté d'un diélectrique à base de polymère de type polyéthersulfone.

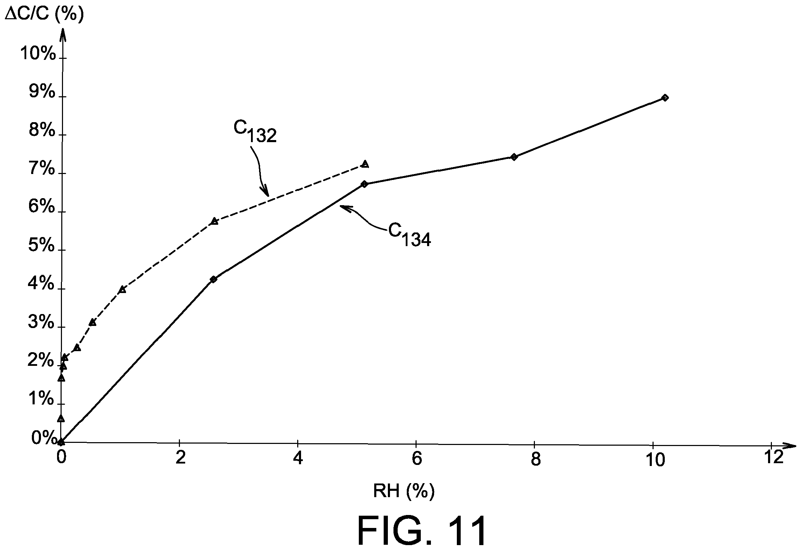

Sur la figure 11 sont données des courbes de variation $C_{132}$, $C_{134}$, de capacité en fonction de l'humidité relative respectivement, d'un capteur d'humidité capacitif à base de SiOCH testé sous atmosphère d'air humide et sous atmosphère d'azote à une pression de 800 mbar dans laquelle on a ajouté de l'air humide contenant un pourcentage d'humidité relative de l'ordre de 50% par paliers, avec une pression croissante.

## Revendications

1. Capteur d'humidité de type capacitif, comprenant :

   - au moins une première électrode (105a) et au moins une deuxième électrode (105b),
   - au moins un matériau diélectrique nanoporeux (108) entre ladite première électrode et ladite deuxième électrode, ledit matériau diélectrique nanoporeux comportant des pores de rayon inférieur à 2 nanomètres, ledit matériau diélectrique nano-poreux (108) comportant en outre des sites hydrophiles, ledit matériau diélectrique nanoporeux (108) étant du MSQ ou du SiOCH,
   - au moins une électrode flottante (315, 415) perméable à l'humidité sur le matériau nanoporeux (108), et située en regard de ladite première électrode et de ladite deuxième électrode.

2. Capteur d'humidité de type capacitif selon la revendication 1, ledit matériau diélectrique nanoporeux (108) comportant, en surface, des sites hydrophiles tels que des sites SiO, SiOH, Si radicalaire.

3. Dispositif de mesure ou de détection d'humidité, comprenant un capteur ($C_1$) de type capacitif selon l'une des revendications 1 ou 2, et au moins un condensateur ($C_2$) doté d'une électrode commune avec ledit capteur capacitif, ledit condensateur comprenant un matériau diélectrique non-poreux.

4. Dispositif selon la revendication 3, le matériau diélectrique non-poreux étant un oxyde de silicium de type TEOS.

5. Dispositif de détection d'humidité dans un composant scellé comprenant un capteur selon l'une des revendications 1 ou 2 ou un dispositif selon l'une des revendications 3 ou 4.

6. Procédé de réalisation d'un capteur d'humidité de type capacitif, comprenant :

- la formation sur un support (100) d'au moins une première électrode (105a) et d'au moins une deuxième électrode (105b),
- la formation d'au moins un matériau diélectrique nano-poreux (108) au moins entre ladite première électrode et ladite deuxième électrode, ledit matériau diélectrique nano-poreux (108, 208) comportant des pores de rayon inférieur à 2 nanomètres, ledit matériau diélectrique nanoporeux (108) étant du MSQ ou du SiOCH,
- un traitement hydrophile dudit matériau diélectrique,
- la réalisation d'au moins une électrode flottante (315, 415) perméable à l'humidité sur le matériau nanoporeux (108), et située en regard de ladite première électrode et de ladite deuxième électrode.

7. Procédé selon la revendication 6, comprenant en outre, après la formation dudit matériau diélectrique nano-poreux, un traitement hydrophile par plasma oxydant dudit matériau diélectrique.

8. Procédé selon la revendication 7, comprenant en outre, le plasma étant à base de $N_2O$.

**Patentansprüche**

1. Kapazitiver Feuchtigkeitssensor, enthaltend:

   - zumindest eine erste Elektrode (105a) und zumindest eine zweite Elektrode (105b),
   - zumindest ein nanoporöses dielektrisches Material (108) zwischen der ersten Elektrode und der zweiten Elektrode, wobei das nanoporöse dielektrische Material Poren mit einem Radius von weniger als 2 Nanometern aufweist, wobei das nanoporöse dielektrische Material (108) ferner hydrophile Stellen aufweist und das nanoporöse dielektrische Material (108) MSQ oder SiOCH ist,
   - zumindest eine schwimmende Elektrode (315, 415), die gegenüber Feuchtigkeit auf dem nanoporösen Material (108) durchlässig ist und sich der ersten Elektrode und der zweiten Elektrode gegenüberliegend befindet.

2. Kapazitiver Feuchtigkeitssensor nach Anspruch 1, wobei das nanoporöse dielektrische Material (108) an der Oberfläche hydrophile Stellen, wie etwa SiO-, SiOH- und Si-Radikalstellen, aufweist.

3. Vorrichtung zum Messen bzw. Erfassen von Feuchtigkeit, enthaltend einen kapazitiven Feuchtigkeitssensor ($C_1$) nach einem der Ansprüche 1 oder 2 und zumindest einen Kondensator ($C_2$), der mit einer mit dem kapazitiven Sensor gemeinsamen Elektrode versehen ist, wobei der Kondensator ein nichtporöses dielektrisches Material enthält.

4. Vorrichtung nach Anspruch 3, wobei das nichtporöse dielektrische Material ein Siliciumoxid vom Typ TEOS ist.

5. Vorrichtung zum Erfassen von Feuchtigkeit in einem versiegelten Bauteil mit einem Sensor nach einem der Ansprüche 1 oder 2 bzw. einer Vorrichtung nach einem der Ansprüche 3 oder 4.

6. Verfahren zum Herstellen eines kapazitiven Feuchtigkeitssensors, umfassend:

   - Ausbilden zumindest einer ersten Elektrode (105a) und zumindest einer zweiten Elektrode (105b) auf einem Träger (100),
   - Ausbilden zumindest eines nanoporösen dielektrischen Materials (108) zumindest zwischen der ersten Elektrode und der zweiten Elektrode, wobei das nanoporöse dielektrische Material (108, 208) Poren mit einem Radius von weniger als 2 Nanometern aufweist, wobei das nanoporöse dielektrische Material (108) MSQ oder SiOCH ist,
   - hydrophiles Behandeln des dielektrischen Materials,
   - Herstellen zumindest einer schwimmenden Elektrode (315, 415), die gegenüber Feuchtigkeit auf dem nanoporösen Material (108) durchlässig ist und sich der ersten Elektrode und der zweiten Elektrode gegenüberliegend befindet.

7. Verfahren nach Anspruch 6, ferner umfassend nach dem Ausbilden des nanoporösen dielektrischen Materials eine hydrophile Behandlung des dielektrischen Materials mit oxidierendem Plasma.

8. Verfahren nach Anspruch 7, ferner umfassend, dass das Plasma auf Basis von $N_2O$ besteht.

**Claims**

1. Humidity sensor of capacitive type, comprising:

   - at least one first electrode (105a) and at least one second electrode (105b),
   - at least one nanoporous dielectric material (108) between said first electrode and said second electrode, said nanoporous dielectric material comprising pores with radius of less than 2 nanometres, said nanoporous dielectric material (108) further comprising hydrophilic sites, said nanoporous dielectric material (108) being MSQ or SiOCH
   - at least one floating electrode (315, 415) permeable to humidity resting upon the nanoporous material and positioned facing said first electrode and said second electrode.

2. The humidity sensor of capacitive type according to claim 1, said nanoporous dielectric material (108) comprising hydrophilic sites, on the surface, such as SiO, SiOH, radical Si sites.

3. Device for measuring or detecting humidity comprising a sensor ($C_1$) of capacitive type according to any of claims 1 or 2, and at least one capacitor ($C_2$) provided with a common electrode with said capacitive sensor, said capacitor comprising a non-porous dielectric material.

4. The device according to claim 3, the non-porous dielectric material being a silicon oxide of TEOS type.

5. Device for detecting humidity in a sealed component comprising a sensor according to any of claims 1 or 2 or a device according to either of claims 3 or 4.

6. Method to fabricate a humidity sensor of capacitive type, comprising:

    - forming on a substrate (100) at least one first electrode (105a) and at least one second electrode (105b),
    - forming at least one nanoporous dielectric material (108) at least between said first electrode and said second electrode, said nanoporous dielectric material (108, 208) comprising pores with a radius of less than 2 nanometres, said nanoporous dielectric material (108) being MSQ or SiOCH,
    - hydrophilic treatment of said dielectric material
    - the fabrication of at least one floating, humidity-permeable electrode (315, 415) on the nanoporous material (108), and positioned facing said first electrode and said second electrode.

7. The method according to claim 6 which, after formation of said nanoporous dielectric material, further comprises hydrophilic treatment by oxidizing plasma of said dielectric material.

8. The method according to claim 7, further comprising, the plasma being $N_2O$ plasma.

FIG. 1A

FIG. 1B

FIG. 2A

FIG. 2B

FIG. 3A

FIG. 3B

FIG. 4A

FIG. 4B

FIG. 5A

FIG. 5B

FIG. 6A

FIG. 6B

FIG. 7A

FIG. 7B

FIG. 8A

FIG. 8B

FIG. 8C

105b     105a     105c

## FIG. 8D

108

## FIG. 8E

110

108

102

100

104

## FIG. 8F

315

108

FIG. 8G

108   110

105

FIG. 8H

208
102
100
104

## FIG. 9A

209
208
102
100
104

## FIG. 9B

213
213
208
102
100
104

## FIG. 9C

215

## FIG. 9D

205a          205b

## FIG. 9E

## FIG. 9F

FIG. 10

EP 2 304 416 B1

FIG. 11

FIG. 12

## RÉFÉRENCES CITÉES DANS LA DESCRIPTION

**Documents brevets cités dans la description**

- US 20040177685 A
- US 20030179805 A
- US 6356087 B
- FR 2486656
- WO 2007036922 A

**Littérature non-brevet citée dans la description**

- Polymer Based Capacitive Hygrometers. **H. GRANGE ; G. DELAPIERRE.** Chemical Sensor Technology. Kodansha Ltd, 1991, vol. 3, 147-162
- **DE YAMANA et al.** Porous Silicon Oxide layer formation by the electrochemical treatment of a porous silicon layer. Electrochemical society, 1990, vol. 137
- **DE SALONEN et al.** Sub ppm trace moisture detection with a simple thermally carbonized porous silicon sensor. Elsevier, 2005
- **BJÖRKQVIST.** *Studies on Hysteresis Reduction in Thermally Carbonized Porous Silicon Humidity Sensor*